# EUROPÄISCHE PATENTSCHRIFT

(11) **EP 0 900 701 B1**
(45) Veröffentlichungstag und Bekanntmachung des Hinweises auf die Patenterteilung: **06.11.2002**
(21) Anmeldenummer: 98116337.1
(22) Anmeldetag: 28.08.1998
(51) Int. Cl.: B60R 21/16

(54) **Insassenschutzvorrichtung für ein Kraftfahrzeug**
Passenger protection device for a vehicle
Dispositif de protection d'un passager pour un véhicule

(30) Priorität: 05.09.1997 DE 19738842
(43) Veröffentlichungstag der Anmeldung: 10.03.1999
(73) Patentinhaber: Volkswagen Aktiengesellschaft, 38436 Wolfsburg (DE)
(72) Erfinder: Sinnhuber, Ruprecht Dipl.-Ing, 38518 Gifhorn (DE)
(74) Vertreter: Neubauer, Hans-Jürgen, Dipl.-Phys.

(56) Entgegenhaltungen:
- WO-A-93/16902
- FR-A- 2 108 278
- US-A- 3 642 303
- US-A- 4 300 894

## Beschreibung

Die Erfindung betrifft eine insassenschutzvorrichtung für ein Kraftfahrzeug mit mindestens einem aufblasbaren Airbag nach dem Oberbegriff des Anspruchs 1.

Bei einer bereits bekannten Insassenschutzvorrichtung für ein Kraftfahrzeug (EP 0 593 172 A1) ist ein aufblasbarer Airbag verwendet, der bei einer Aktivierung wenigstens eines zugehörigen Gasgenerators aus einer Austrittsöffnung im Bereich vor einem Insassen ins Innere des Kraftfahrzeugs austritt. Dieser Airbag enthält zwei Kammern, wobei eine untere Thoraxschutz-Gaskammer durch den Gasgenerator aufblasbar ist. Über der Thoraxschutz-Gaskammer ist mit einer gemeinsamen Zwischenwand eine Kopfschutz-Gaskammer angeordnet, wobei in der Zwischenwand Gasdurchströmöffnungen angebracht sind, durch die über die Thoraxschutz-Gaskammer die Kopfschutz-Gaskammer aufblasbar ist. Nach der Aktivierung des Gasgenerators ist hier ein Gasstrahl unmittelbar auf den Insassen gerichtet, so dass der Airbag unmittelbar nach seinem Austreten aus der Austrittsöffnung mit unerwünscht heftiger Aggressivität gerichtet auf den Insassen schießt, bevor sich die Thoraxschutz-Gaskammer entfaltet und dann über die Gasdurchströmöffnungen auch die Kopfschutz-Gaskammer aufgeblasen wird. Der insgesamt aufgeblasene Airbag hat eine ballonartige Form, so dass auch im Halsauftreffbereich eine wulstartige Ausbauchung vorliegt. Dadurch ist nicht auszuschließen, dass sich der Airbag insbesondere an seiner auf den Insassen zugerichteten Verbindungsstelle zwischen der Thoraxschutz-Gaskammer und der Kopfschutz-Gaskammer unter das Kinn des Insassen bewegt und dann der Kopf des Insassen entgegen der Aufprallrichtung mit starker Beanspruchung der Halswirbelsäule rückwärts beschleunigt wird.

Weiter ist aus der US-A-4 300 894 eine gattungsgemäße Insassenschutzvorrichtung für ein Kraftfahrzeug mit mindestens einem aufblasbaren Airbag bekannt, der bei einer Aktivierung wenigstens eines zugehörigen Gasgenerators aus einer Austrittsöffnung im Bereich vor einem Insassen ins Innere des Kraftfahrzeugs austritt, wobei der Airbag mehrkammerig ausgebildet ist mit wenigstens einer Thoraxschutz-Gaskammer, der eine Gasvorkammer vorgeordnet ist, die mit einem Gasgenerator in Verbindung steht und von diesem unmittelbar aufblasbar ist, wobei die Gasvorkammer mittels Gasdurchströmöffnungen mit der Thoraxschutz-Gaskammer verbunden ist, so dass die Thoraxschutz-Gaskammer mittelbar durch den Gasgenerator über die Gasvorkammer aufblasbar ist. Weiter ist eine mit der Thoraxschutz-Gaskammer mittels Gasdurchströmöffnungen verbundene Kopfschutz-Gaskammer vorgesehen, die bei aufgeblasenem Airbag über der Thoraxschutz-Gaskammer liegt.

Konkret weist die Kopfschutz-Gaskammer auch hier eine ballonartige Form auf, so dass im Halsauftreffbereich eine wulstartige Ausbauchung vorliegt. Dadurch besteht auch hier die Gefahr, dass sich der Airbag, wie dies bereits zuvor in Verbindung mit der EP 0 593 172 A1 geschildert worden ist, insbesondere an seiner auf den Insassen zu gerichteten Verbindungsstelle zwischen der Thoraxschutz-Gaskammer und der Kopfschutz-Gaskammer unter das Kinn des Insassen bewegt und dann der Kopf des Insassen entgegen der Aufprallrichtung mit starker Beanspruchung der Halswirbelsäule in unerwünschter Weise rückwärts beschleunigt wird.

Bei einer weiter bekannten Insassenschutzvorrichtung für ein Kraftfahrzeug mit einem im Bereich vor einem Insassen aufblasbaren Airbag (DE 297 00 804 U1) ist dieser im aufgeblasenen Zustand unsymmetrisch geformt, dergestalt, dass im Kopfaufprallbereich ein größeres Volumen als im Thoraxaufprallbereich vorliegt. Allgemein ist auf die Möglichkeit hingewiesen, einen solchen Airbag in mehrere aufzublasende Kammern zu unterteilen, wozu jedoch keine konkreten Angaben gemacht sind. Auch hier ist ein initialer Gasstrahl aus dem Gasgenerator mit unerwünschter Aggressivität auf den Insassen gerichtet.

Weiter ist eine Insassenschutzvorrichtung für ein Kraftfahrzeug gegen einen Seitenaufprall bekannt (DE 195 38 657 A1), bei der aus einer Austrittsöffnung einer Rückenlehne ein Airbag mit einer Thoraxschutz-Gaskammer und einer daran anschließenden Kopfschutz-Gaskammer austritt. Hier ist der Gasstrahl aus dem zugeordneten Gasgenerator in Fahrzeuglängsrichtung gerichtet, so dass bei einem solchen Seitenairbag das Problem einer hohen Aggressivität durch einen auf den Insassen gerichteten Gasstrahl nicht auftritt.

Es ist weiter bekannt, einen Gasdiffusor einem Gasgenerator nachzuordnen (WO 96 25 309) mit dem die Strahlrichtung des Gases beeinflussbar ist und ein auf einen Insassen gerichteter Gasstrahl in unterschiedliche Richtungen aufteilbar ist. Ein solcher Diffusor ist ein zusätzliches Bauteil, das einen Einbauraum erfordert und das das Fahrzeuggewicht erhöht. Für eine zusätzliche Funktion ist ein solcher Diffusor regelmäßig nicht zu verwenden.

Aufgabe der Erfindung ist es, eine gattungsgemäße Insassenschutzvorrichtung dahingehend zu verbessern, dass bei einfachem Aufbau und hoher Schutzfunktion die Aggressivität einer Kopfschutz-Gaskammer eines Airbags reduziert wird.

Diese Aufgabe wird mit den Merkmalen des Anspruchs 1 gelöst.

Gemäß Anspruch 1 weist die Kopfschutz-Gaskammer eine im wesentlichen in einer Fahrzeugquerebene von der Thoraxschutz-Gaskammer nach oben anschließende U-Wulstform auf, deren U-Schenkelenden nach unten weisen und im Bereich von Gasdurchströmöffnungen mit der Thoraxschutz-Gaskammer verbunden sind, so dass die Kopfschutz-Gaskammer im Halsauftreffbereich eines Insassen keinen Halswulst aufweist, und es sind zwei Gasdurchströmöffnungen vorgesehen, wobei jedem U-Schenkelende eine dieser Gasdurchströmöffnungen zugeordnet ist, die in einem seitlichen oberen Bereich der Thoraxschutz-Gaskammer angeordnet ist.

Vorteilhaft weist der Airbag bei dieser Ausbildung im Bereich der Kopfschutz-Gaskammer im Halsauftreffbereich eines Insassen somit keinen Halswulst auf, der mit der Gefahr von Halswirbelverletzungen unter das Kinn eines aufprallenden Insassen gelangen könnte. Auch mit einer derartigen Gestaltungsmaßnahme des Airbags wird dessen Aggressivität erheblich verringert mit einer gezielten Einflussnahme auf die Kinematik des Insassen.

Daneben wird durch die der Thoraxschutz-Gaskammer vorgeordnete Gasvorkammer erreicht, dass der Gasstrahl aus dem Gasgenerator nicht direkt auf den Insassen gerichtet ist sondern über die umlenkenden Gasdurchströmöffnungen von der Gasvorkammer in die Thoraxschutz-Gaskammer gelangt. Dadurch ist die Aggressivität des Airbags durch ein unerwünscht heftiges Auftreffen auf einen Insassen verringert. Ein zusätzliches Diffusorteil kann entbehrlich sein.

Bevorzugt liegt dabei im aufgeblasenen Zustand des Airbags die Gasvorkammer im unteren Bereich an der Thoraxschutz-Gaskammer ohne Abstützfunktion für einen Insassen, so dass ein in die Gasvorkammer unmittelbar gerichteter Gasstrahl keine Berührung mit einem Insassen verursacht. Die wenigstens zwei Gasdurchströmöffnungen liegen dabei in einem seitlichen oberen Bereich der Gasvorkammer zur Thoraxschutz-Gaskammer. Dies stellt eine günstige Anordnung der Gasdurchströmöffnungen zur Vermeidung eines axial auf den Insassen gerichteten Gasstrahls dar.

In an sich bekannter Weise ist die Austrittsöffnung für den Airbag durch eine Blende oder Abdecköffnung bei nicht aktiviertem Airbag verschlossen. Vorteilhaft kann hier bei einer Aktivierung des Gasgenerators die erste Volumenvergrößerung der Gasvorkammer in einer Zusatzfunktion zur Entfernung der Blende oder Abdeckung verwendet werden.

Besonders geeignet ist diese Funktion bei einer Austrittsöffnung in einer Schalttafel mit einer durchgehenden, fugenlosen Schalttafelabdeckung und einem Aufreißdeckel. Dabei wird hinter dem Aufreißdeckel ein nach unten schwenkbarer, an der Rückseite des Aufreißdeckels anliegend gehaltener Aufreißhebel angeordnet, der bei einer Aktivierung des Gasgenerators durch die aufblasbare Vorkammer nach unten geschwenkt wird und dabei den Aufreißdeckel aufreißt.

Bei einer geeigneten Formgebung des Aufreißdeckels beispielsweise als Winkelhebel wird erreicht, dass nach einer Airbagaktivierung und Entfernung der Austrittsöffnungsabdeckung keine festen Deckelteile unkontrolliert in Richtung auf einen Insassen geschleudert werden, da der Aufreißhebel weiter im Schwenklager gehalten ist und nur relativ weiche und nachgiebige Teile der Schalttafelabdeckung aus der Schalttafeloberfläche abstehen. Insgesamt wird dadurch die Möglichkeit einer Verletzung an der Austrittsöffnung oder durch Deckelteile verringert.

Bei einem Schrägaufprall besteht die Gefahr, dass ein auf einen aktivierten Airbag auftreffender Insasse seitlich abgleitet, wodurch die Schutzfunktion des Airbags verringert ist. Daher wird in einer bevorzugten Weiterbildung der Kopfschutz-Gaskammer vorgeschlagen, dass die Wülste der U-Schenkel im Bereich der U-Basis gegenüber dieser als Abgleitschutz bei einem Schrägaufprall nach oben gezogen und verdickt sind.

Je nach den Gegebenheiten kann es vorteilhaft sein, einen zweiten oder zweistufigen Gasgenerator zu verwenden, der für einen zweiten, zeitversetzten Aufblasvorgang mit der Thoraxschutz-Gaskammer oder einer weiteren Thoraxschutz-Gaskammer verbunden ist. Ein solcher zweiter Aufblasvorgang kann für eine verbesserte Abstützung bei einem sehr schweren Aufprall und/oder bei einem sehr schweren Insassen und/oder einer "Out of Position"-Stellung vorteilhaft sein. Diese Randbedingungen für die Auslösung eines zweiten Aufblasvorgangs sind mit an sich bekannten Einrichtungen, wie Aufprallsensoren und/oder Insassenerkennungseinrichtungen detektierbar.

Anhand einer Zeichnung wird die Erfindung näher erläutert.

Es zeigen:
Fig. 1 eine schematische Darstellung einer Schalttafelabdeckung mit einem Aufreißdeckel,
Fig. 2 eine schematische Darstellung eines aufgeblasenen mehrkammrigen Airbags,
Fig. 3 eine schematische Darstellung einer ersten Stufe einer Airbagaktivierung,
Fig. 4 eine schematische Darstellung einer zweiten Stufe einer Airbagaktivierung,
Fig. 5 eine schematische Darstellung einer dritten Stufe einer Airbagaktivierung, und
Fig. 6 eine schematische Darstellung einer vierten Stufe einer Airbagaktivierung.

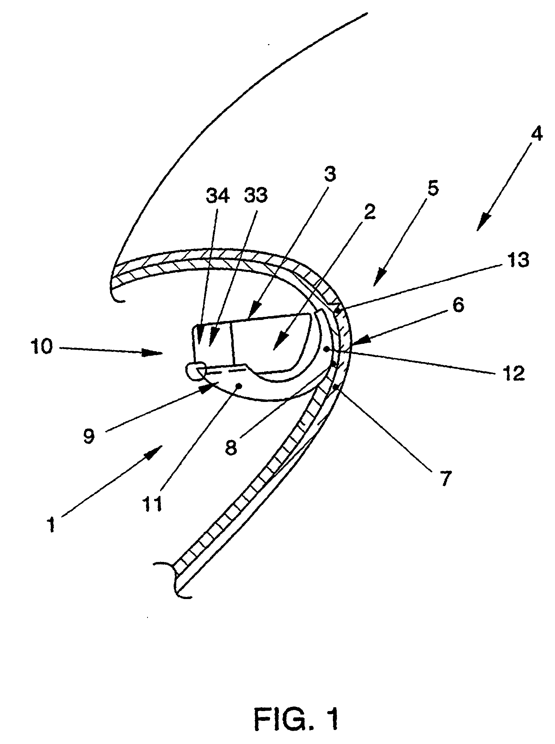

In der Fig. 1 ist schematisch eine Insassenschutzanordnung 1 für ein Kraftfahrzeug dargestellt. Diese Insassenschutzeinrichtung 1 weist eine Airbaganordnung 3 mit einem mehrkammrigen Airbag 2 auf, der mittels eines ersten und zweiten Gasgenerators 33, 34 aktivierbar ist. Der Airbag 2 tritt im Falle einer Aktivierung durch eine in einer Schalttafel 5 ausbildbare Austrittsöffnung im Bereich vor einem Insassen ins Innere 4 des Kraftfahrzeugs. Die Schalttafel 5 ist aus einer durchgehenden, fugenlosen Schalttafelabdeckung 6 mit einem Aufreißdeckel 7 aufgebaut.

Hinter dem Aufreißdeckei 7 ist ein nach unten schwenkbarer, bogenförmiger Winkelhebel 9 als Aufreißhebel angeordnet. In der in der Fig. 1 dargestellten Ruhestellung 10 des Winkelhebels 9 ist ein etwa waagrecht liegender erster Winkelschenkel 11 endseitig schwenkbar gelagert, während ein zweiter, etwa vertikaler Winkelschenkel 12 an der Rückseite 8 des Aufreißdeckels 7 anliegt. Im Bereich des freien Schenkelendes des zweiten, vertikalen Winkelschenkels 12 ist in der Schalttafefabdeckung 6 eine Materialschwächung als Sollaufreißkante 13 des Aufreißdeckels 7 ausgebildet.

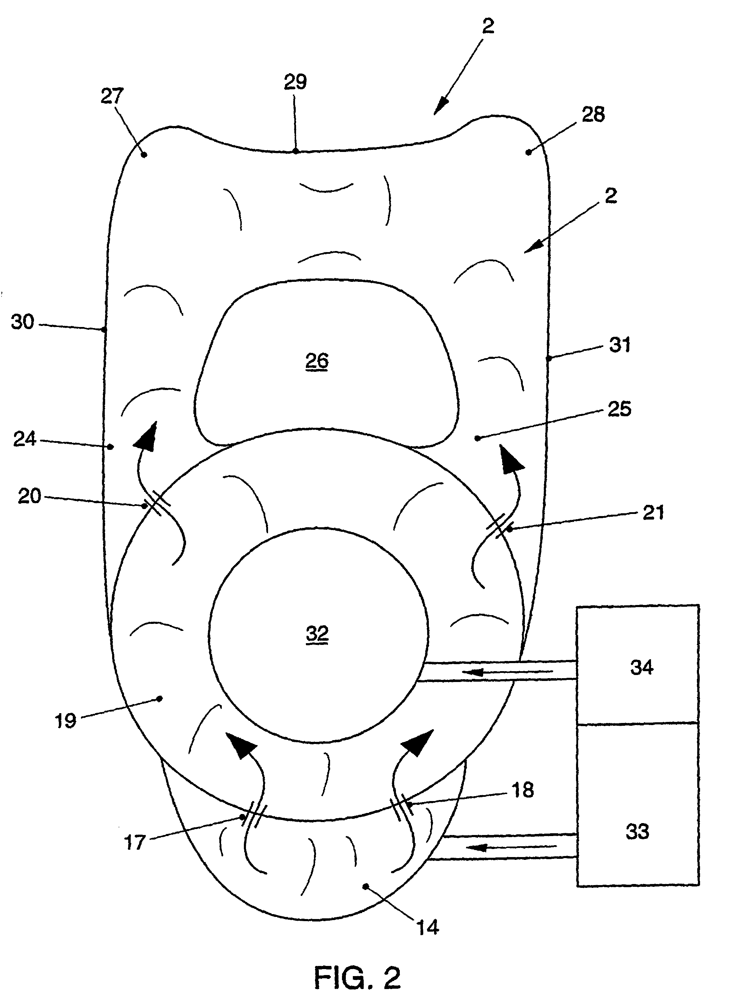

Der Aufbau des mehrkammrigen Airbags 2 wird nachfolgend in Verbindung mit dessen vierstufiger Aktivierung anhand der Fig. 2 bis 6 näher erläutert:

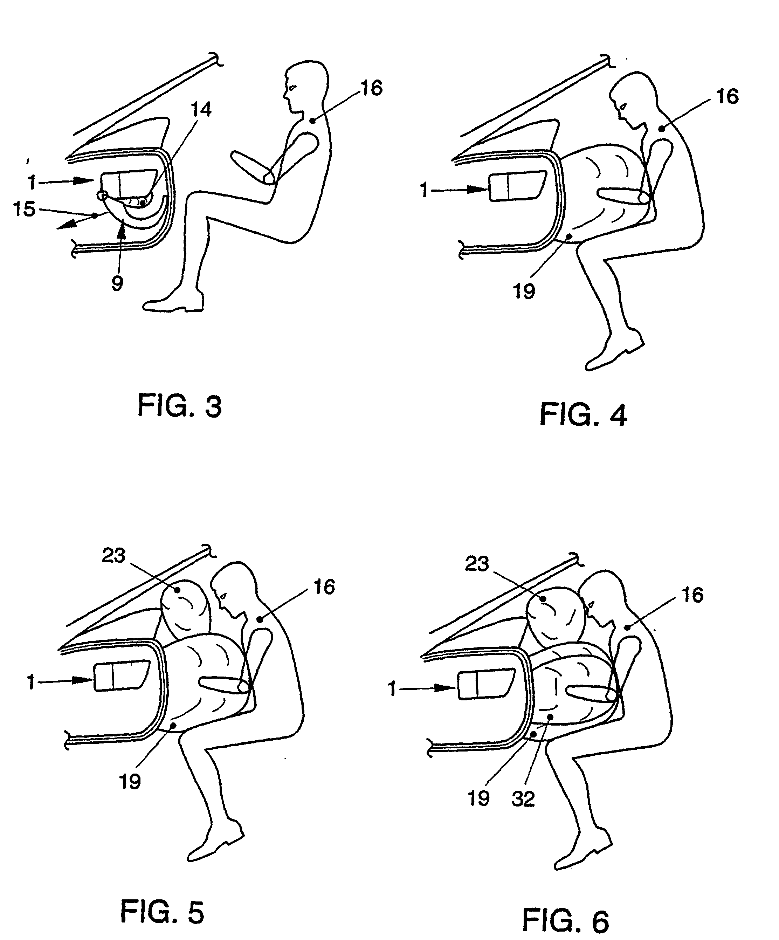

Im Falle eines Unfalls und einer Aktivierung der Insassenschutzvorrichtung 1 wird in der ersten Stufe der Airbagaktivierung zuerst eine Gasvorkammer 14 mittels des ersten Gasgenerators 33 aufgeblasen. Infolge der Volumenvergrößerung der Gasvorkammer 14 wird, wie dies in der Fig. 3 schematisch dargestellt ist, der mit seinem vertikalen Winkelschenkel 12 an dem Aufreißdeckel 7 anliegende Winkelhebel 9 aus seiner Ruhestellung 10 nach unten bewegt, wie dies mit dem Pfeil 15 angedeutet ist. Der Winkelhebel 9 übt dabei eine derartig große Kraft auf den Aufreißdeckel 7 aus, dass die Schalttafelabdeckung 6 im Bereich der Sollaufreißkante 13 reißt und der Aufreißdeckel 7 ebenfalls nach unten bewegt wird. Dadurch wird in der Schalttafelabdeckung 6 eine Austrittsöffnung für den Airbag 2 im Inneren 4 des Kraftfahrzeugs im Bereich vor einem Insassen 16 ausgebildet. Die Gasvorkammer 14 übt dabei keine Abstützfunktion für den Insassen 16 aus.

Wie dies der schematischen Darstellung der Fig. 2 entnommen werden kann, ist die Gasvorkammer 14 einer Thoraxschutz-Gaskammer 19 des Airbags 2 vorgeordnet und mit dieser über Gasdurchströmöffnungen 17, 18 verbunden. Die zwei Gasdurchströmöffnungen 17, 18 sind dabei jeweils in einem seitlichen, oberen Bereich der Gasvorkammer 14 zur Thoraxschutz-Gaskammer 19 angeordnet. Somit ist die Thoraxschutz-Gaskammer 19 mittelbar durch den ersten Gasgenerator 33 über die Gasvorkammer 14 aufblasbar. Dadurch wird die Thoraxschutz-Gaskammer 19, wie dies in der Fig. 4 schematisch dargestellt ist, in der zweiten Stufe der Airbagaktivierung für einen Thoraxschutz des Insassen 16 ohne einen direkt auf diesen einwirkenden Gasstrahl aufgeblasen.

Die Thoraxschutz-Gaskammer 19 ist, wie dies aus der Fig. 2 ersichtlich ist, mit einer Kopfschutz-Gaskammer 23 verbunden, die über zwei Gasdurchströmöffnungen 20, 21 aufblasbar ist. Diese Gasdurchströmöffnungen 20, 21 sind jeweils in einem seitlichen, oberen Bereich der Thoraxschutz-Gaskammer 19 zur Kopfschutz-Gaskammer 23 angeordnet. Die Kopfschutz-Gaskammer 23 wird ebenfalls mittelbar durch den ersten Gasgenerator 33 aufgeblasen. Dadurch wird die Kopfschutz-Gaskammer 23, wie dies aus der schematischen Darstellung der Fig. 5 ersichtlich ist, in der dritten Stufe der Airbagaktivierung für einen Kopfschutz des Insassen 16 ebenfalls ohne einen direkt auf diesen einwirkenden Gasstrahl über der Thoraxschutz-Gaskammer 19 aufgeblasen.

Wie dies der Fig. 2 entnommen werden kann, weist die Kopfschutz-Gaskammer 23 eine U-Wulstform auf, deren U-Schenkelenden 24, 25 nach unten weisen und im Bereich der seitlichen Gasdurchströmöffnungen 20, 21 mit der Thoraxschutz-Gaskammer 19 verbunden sind. Dadurch weist die Kopfschutz-Gaskammer 23 im Halsauftreffbereich 26 des Insassen 16 keinen Halswulst auf. Femer sind im Bereich der U-Basis 29 der Kopfschutz-Gaskammer 23 Wülste 27, 28 der U-Schenkel 30, 31 gegenüber dieser U-Basis 29 nach oben gezogen und verdickt und dienen so als Abgleitschutz bei einem Schrägaufprall.

In der vierten Stufe der Airbagaktivierung wird über den zweiten Gasgenerator 34 in einem zweiten Aufblasvorgang eine zweite, bevorzugt kleinere und in der ersten Thoraxschutz-Gaskammer 19 enthaltene Thoraxschutz-Gaskammer 32 zeitversetzt gegenüber dem ersten Aufblasvorgang aufgeblasen. Wie dies in der Fig. 6 lediglich schematisch dargestellt ist, verstärkt diese zweite Thoraxschutz-Gaskammer 32 die Abstützfunktion der ersten Thoraxschutz-Gaskammer 19 z. B. bei einem sehr schweren Aufprall und/oder bei einem sehr schweren Insassen 16 und/oder einer "Out of Position"-Stellung des Insassen 16. Die Auslösung des zweiten Aufblasvorgangs erfolgt dabei z.B. mit Hilfe von Aufprallsensoren und/oder Insassenerkennungseinrichtungen.

## Patentansprüche

1. Insassenschutzvorrichtung für ein Kraftfahrzeug, mit mindestens einem aufblasbaren Airbag (2), der bei einer Aktivierung wenigstens eines zugehörigen Gasgenerators (33) aus einer Austrittsöffnung im Bereich vor einem Insassen (16) ins Innere des Kraftfahrzeugs austritt, wobei der Airbag (2) mehrkammrig ausgebildet ist mit wenigstens einer Thoraxschutz-Gaskammer (19), der eine kleinere aufblasbare Gasvorkammer (14) vorgeordnet ist, die mit dem Gasgenerator (33) in Verbindung steht und von diesem unmittelbar aufblasbar ist, wobei die Gasvorkammer (14) mittels Gasdurchströmöffnungen (17, 18) mit der Thoraxschutz-Gaskammer (19) verbunden ist, so dass die Thoraxschutz-Gaskammer (19) mittelbar durch den Gasgenerator (33) über die Gasvorkammer (14) aufblasbar ist, und mit einer mit der Thoraxschutz-Gaskammer (19) mittels Gasdurchströmöffnungen (20, 21) verbundenen Kopfschutz-Gaskammer (23), die bei aufgeblasenem Airbag (2) über der Thoraxschutz-Gaskammer (19) liegt,
**dadurch gekennzeichnet,**
**dass** die Kopfschutz-Gaskammer (23) eine im wesentlichen in einer Fahrzeugquerebene von der Thoraxschutz-Gaskammer (19) nach oben anschließende U-Wulstform aufweist, deren U-Schenkelenden (24, 25) nach unten weisen und im Bereich von Gasdurchströmöffnungen (20, 21) mit der Thoraxschutz-Gaskammer (19) verbunden sind, so dass die Kopfschutz-Gaskammer (23) im Halsauftreffbereich eines Insassen (16) keinen Halswulst aufweist, und
**dass** zwei Gasdurchströmöffnungen (20, 21) vorgesehen sind, wobei jedem U-Schenkelende (24, 25) eine dieser Gasdurchströmöffnungen (20, 21) zugeordnet ist, die in einem seitlichen oberen Bereich der Thoraxschutz-Gaskammer (19) zu der Kopfschutz-Gaskammer (23) angeordnet ist.

2. Insassenschutzvorrichtung nach Anspruch 1, **dadurch gekennzeichnet,**
**dass** die Gasvorkammer (14) im unteren Bereich an der Thoraxschutz-Gaskammer (19) im aufgeblasenen Zustand des Airbags (2) ohne Abstützfunktion für einen Insassen liegt, und
**dass** wenigstens zwei Gasdurchströmöffnungen (17, 18) jeweils in einem seitlichen oberen Bereich der Gasvorkammer (14) zur Thoraxschutz-Gaskammer (19) angeordnet sind.

3. Insassenschutzvorrichtung nach Anspruch 1 oder Anspruch 2, **dadurch gekennzeichnet,**
**dass** die Austrittsöffnung durch eine Blende oder Abdeckung (7) bei nicht aktiviertem Airbag (2) verschlossen ist, und
**dass** bei einer Aktivierung des Gasgenerators (33) die als erstes aufblasbare Gasvorkammer (14) auch zur Entfernung der Blende oder Abdeckung (7) verwendet wird.

4. Insassenschutzvorrichtung nach Anspruch 3, **dadurch gekennzeichnet,**
**dass** die Austrittsöffnung in einer Schalttafel (5) mit einer durchgehenden, fugenlosen Schalttafelabdeckung (6) und einem Aufreißdeckel (7) angebracht ist, und
**dass** hinter dem Aufreißdeckel (7) ein nach unten schwenkbarer, an der Rückseite (8) des Aufreißdeckels (7) anliegend gehaltener Aufreißhebel (9) angeordnet ist, der bei einer Aktivierung des Gasgenerators (33) durch die aufblasbare Vorkammer (14) nach unten geschwenkt wird und dabei den Aufreißdeckel (7) aufreißt.

5. Insassenschutzvorrichtung nach Anspruch 4, **dadurch gekennzeichnet, dass** der Aufreißhebel (9) bogenförmig in der Art eines Winkelhebels ausgebildet ist, bei dem in der Ruhestellung ein etwa waagrecht liegender erster Winkelschenkel (11) endseitig schwenkbar gelagert ist und ein zweiter etwa vertikaler Winkelschenkel (12) an der Rückseite (8) des Aufreißdeckels (7) anliegt.

6. Insassenschutzvorrichtung nach Anspruch 5, **dadurch gekennzeichnet,**
**dass** der Aufreißdeckel (7) Teil eines Schalttafelträgers ist, und
**dass** im Bereich der Endseite des zweiten Winkelschenkels (12) eine Materialschwächung als Sollaufreißkante (13) des Aufreißdeckels (7) liegt.

7. Insassenschutzvorrichtung nach einem der Ansprüche 1 bis 6, **dadurch gekennzeichnet, dass** die Wülste (20, 28) der U-Schenkel (30, 31) im Bereich der U-Basis (29) gegenüber dieser als Abgleitschutz bei einem Schrägaufprall nach oben gezogen und verdickt sind.

8. Insassenschutzvorrichtung nach einem der Ansprüche 1 bis 7, **dadurch gekennzeichnet, dass** ein zweiter oder zweistufiger Gasgenerator (34) mit der Thoraxschutz-Gaskammer (19) verbunden ist, der zeitversetzt gegenüber dem ersten Aufblasvorgang aktivierbar ist und die Abstützfunktion der Thoraxschutz-Gaskammer (19) durch einen zweiten Aufblasvorgang verstärkt.

9. Insassenschutzvorrichtung nach Anspruch 8, **dadurch gekennzeichnet, dass** für den zweiten Aufblasvorgang eine zweite und in der ersten Thoraxschutz-Gaskammer (19) enthaltene Thoraxschutz-Gaskammer (32) vorgesehen ist.

## Claims

1. Occupant protection device for a motor vehicle, having at least one inflatable airbag (2) which, upon activation of at least one associated gas generator (33), leaves an exit opening in the region in front of an occupant (16) and enters the interior of the motor vehicle, the airbag (2) being of a multi-chambered design with at least one thorax-protection gas chamber (19) which is preceded by a smaller inflatable gas prechamber (14), which is in connection with the gas generator (33) and can be inflated directly by the latter, the gas prechamber (14) being connected to the thorax-protection gas chamber (19) by means of gas-throughflow openings (17, 18), so that the thorax-protection gas chamber (19) can be inflated indirectly by the gas generator (33) via the gas prechamber (14), and having a head-protection gas chamber (23), which is connected to the thorax-protection gas chamber (19) by means of gas-throughflow openings (20, 21) and, with the airbag (2) inflated, lies above the thorax-protection gas chamber (19), **characterized in that** the head-protection gas chamber (23) has a U-bead shape, which adjoins the thorax-protection gas chamber (19) upwards, essentially in a transverse plane of the vehicle, and the U-leg ends (24, 25) of which point downwards and are connected in the region of gas-throughflow openings (20, 21) to the thorax-protection gas chamber (19), so that the head-protection gas chamber (23) does not have in the neck-impact region of an occupant (16) any neck bead, and
**in that** two gas-throughflow openings (20, 21) are provided, each U-leg end (24, 25) being assigned to one of these gas-throughflow openings (20, 21), which is arranged in a lateral upper region of the thorax-protection gas chamber (19) in relation to the head-protection gas chamber (23).

2. Occupant protection device according to Claim 1, **characterized in that**, in the inflated state of the airbag (2), the gas prechamber (14) lies in the lower region against the thorax-protection gas chamber (19), without any supporting function for an occupant, and **in that** at least two gas-throughflow openings (17, 18) are respectively arranged in a lateral upper region of the gas prechamber (14) with respect to the thorax-protection gas chamber (19).

3. Occupant protection device according to Claim 1 or Claim 2, **characterized in that** the exit opening is closed by a panel or cover (7) when the airbag (2) is not activated, and **in that**, upon activation of the gas generator (33), the gas prechamber (14), being the first inflatable, is also used for removal of the panel or cover (7).

4. Occupant protection device according to Claim 3, **characterized in that** the exit opening is provided in a dashboard (5) with a continuous, jointless dashboard cover (6) and a tear-open cover (7), and **in that** behind the tear-open cover (7) there is arranged a tear-open lever (9), which can be swivelled downwards, is secured up against the rear side (8) of the tear-open cover (7) and, upon activation of the gas generator (33) by the inflatable prechamber (14), is swivelled downwards and thereby tears open the tear-open cover (7).

5. Occupant protection device according to Claim 4, **characterized in that** the tear-open lever (9) is designed in an arcuate form in the manner of an angle lever, in the case of which, in the position of rest, an approximately horizontal first angle leg (11) is mounted at the end such that it can be swivelled and a second, approximately vertical angle leg (12) bears against the rear side (8) of the tear-open cover (7).

6. Occupant protection device according to Claim 5, **characterized in that** the tear-open cover (7) is part of a dashboard support, and **in that** there lies in the region of the end side of the second angle leg (12) a material weakening as a predetermined tear-open edge (13) of the tear-open cover (7).

7. Occupant protection device according to one of Claims 1 to 6, **characterized in that** the beads (27, 28) of the U-legs (30, 31) are drawn upwards and thickened in the region of the U-base (29) in comparison with the latter, as a protection against sliding off in the event of oblique impact.

8. Occupant protection device according to one of Claims 1 to 7, **characterized in that** there is connected to the thorax-protection gas chamber (19) a second or two-stage gas generator (34), which can be activated with a time delay with respect to the first inflating operation and enhances the supporting function of the thorax-protection gas chamber (19) by a second inflating operation.

9. Occupant protection device according to Claim 8, **characterized in that** for the second inflating operation there is provided a second thorax-protection gas chamber (32), which is contained in the first thorax-protection gas chamber (19).

## Revendications

1. Dispositif de protection d'un passager pour un véhicule automobile, comprenant au moins un airbag gonflable (2), qui, lors de l'activation d'au moins un générateur de gaz associé (33) sort d'une ouverture de sortie dans la région se trouvant devant un passager (16) à l'intérieur du véhicule automobile, l'airbag (2) étant réalisé avec plusieurs compartiments avec au moins un compartiment à gaz (19) pour la protection du thorax, devant lequel est disposé un plus petit compartiment à gaz antérieur gonflable (14), qui est connecté au générateur de gaz (33) et peut être gonflé directement par celui-ci, le compartiment à gaz antérieur (14) étant connecté au compartiment à gaz (19) pour la protection du thorax au moyen d'ouvertures de passage de gaz (17, 18), de sorte que le compartiment à gaz (19) pour la protection du thorax puisse être gonflé indirectement par le générateur de gaz (33) par le biais du compartiment à gaz antérieur (14), et comprenant un compartiment à gaz (23) de protection de la tête connecté au compartiment à gaz (19) pour la protection du thorax au moyen d'ouvertures de passage de gaz (20, 21) et se trouvant sur le compartiment à gaz (19) pour la protection du thorax lorsque l'airbag (2) est gonflé,
**caractérisé en ce que**
le compartiment à gaz (23) pour la protection de la tête présente une forme de bourrelet en U se raccordant essentiellement dans un plan transversal au véhicule depuis le compartiment à gaz (19) pour la protection du thorax vers le haut, dont les extrémités des branches du U (24, 25) sont tournées vers le bas et sont connectées au compartiment à gaz (19) pour la protection du thorax dans la région des ouvertures de passage de gaz (20, 21), de sorte que le compartiment à gaz (23) pour la protection de la tête ne présente aucun bourrelet pour la gorge dans la région d'incidence avec la gorge d'un passager (16), et
**en ce qu'**il est prévu deux ouvertures de passage de gaz (20, 21), l'une de ces ouvertures de passage de gaz (20, 21) étant associée à chaque extrémité des branches du U (24, 25), et étant disposée dans une région latérale supérieure du compartiment à gaz (19) pour la protection du thorax vers le compartiment à gaz (23) pour la protection de la tête.

2. Dispositif de protection d'un passager selon la revendication 1, **caractérisé en ce que** le compartiment à gaz antérieur (14) se trouve dans la région inférieure contre le compartiment à gaz (19) pour la protection du thorax dans l'état gonflé de l'airbag (2) sans fonction de support pour un passager et
**en ce qu'**au moins deux ouvertures de passage de gaz (17, 18) sont disposées à chaque fois dans une région latérale supérieure du compartiment à gaz antérieur (14) vers le compartiment à gaz (19) pour la protection du thorax.

3. Dispositif de protection d'un passager selon la revendication 1 ou la revendication 2, **caractérisé en ce que** l'ouverture de sortie est fermée par un bandeau ou un recouvrement (7) lorsque l'airbag (2) n'est pas activé, et
**en ce que** lors de l'activation du générateur de gaz (33), le compartiment à gaz antérieur (14) pouvant être gonflé en premier est utilisé également pour enlever le bandeau ou le recouvrement (7).

4. Dispositif de protection d'un passager selon la revendication 3, **caractérisé en ce que** l'ouverture de sortie est prévue dans un tableau de bord (5) comportant un recouvrement de tableau de bord (6) continu sans joint et un couvercle arrachable (7), et **en ce que** derrière le couvercle arrachable (7) est disposé un levier d'arrachement (9) pivotable vers le bas, maintenu en applique contre le dos (8) du couvercle arrachable (7), qui, lors d'une activation du générateur de gaz (33) est pivoté vers le bas par le compartiment antérieur gonflable (14) et arrache ainsi le couvercle arrachable (7).

5. Dispositif de protection d'un passager selon la revendication 4, **caractérisé en ce que** le levier d'arrachement (9) est réalisé en forme de coude à la manière d'un levier coudé, dans lequel, dans la position de repos, une première branche du coude (11) approximativement horizontale est montée pivotante du côté de son extrémité et une deuxième branche du coude (12) approximativement verticale repose contre le dos (8) du couvercle arrachable (7).

6. Dispositif de protection d'un passager selon la revendication 5, **caractérisé en ce que** le couvercle arrachable (7) fait partie d'un support du tableau de bord et **en ce qu'**un affaiblissement de matière servant d'arête destinée à l'arrachage (13) du couvercle arrachable (7) se trouve dans la région du côté de l'extrémité de la deuxième branche du coude (12).

7. Dispositif de protection d'un passager selon l'une quelconque des revendications 1 à 6, **caractérisé en ce que** les bourrelets (27, 28), des branches du U (30, 31) sont tirés vers le haut et épaissis dans la région de la base du U (29) contre celle-ci en tant que protection contre le glissement en cas de choc oblique.

8. Dispositif de protection d'un passager selon l'une quelconque des revendications 1 à 7, **caractérisé en ce qu'**un deuxième générateur de gaz (34), ou un générateur de gaz à deux étages (34) est connecté au compartiment à gaz (19) pour la protection du thorax, et peut être activé avec un certain retard par rapport au premier gonflage, et la fonction de support du compartiment à gaz (19) pour la protection du thorax est renforcée par un deuxième gonflage.

9. Dispositif de protection d'un passager selon la revendication 8, **caractérisé en ce que** pour le deuxième gonflage, il est prévu un deuxième compartiment de gaz (32) pour la protection du thorax contenu dans le premier compartiment à gaz (19) pour la protection du thorax.
